# EUROPEAN PATENT APPLICATION

(11) **EP 0 959 001 A1**
(43) Date of publication of application: **24.11.1999**
(21) Application number: 99107696.9
(22) Date of filing: 17.04.1999
(51) Int. Cl.: B64G 1/44, B64G 1/24

(54) **Method and apparatus for performing two axis solar array tracking in a geostationary satellite**

(30) Priority: 22.05.1998 US 83470
(71) Applicant: Hughes Electronics Corporation, El Segundo, California 90245-0956 (US)
(72) Inventor: Thompson, Brian D., Palos Verdes Estates, CA 90274 (US); Krause, Stanley J., Northridge, CA 91326 (US); Schwartz, Joel A., Playa Del Rey, CA 90293 (US)
(74) Representative: Lindner, Michael, Dipl.-Ing.

(57) **Abstract**

A method and apparatus for performing two axis solar array tracking in a geostationary satellite (2, 10) are disclosed. In the disclosed apparatus (20, 120), a rotational motor (22) is employed for selectively rotating a solar wing (4, 14) about a first axis (23), and a pivoting motor (24) is used for selectively pivoting the solar wing (4, 14) about a second axis (25) which is substantially perpendicular to the first axis. Rotation of the solar wing (4, 14) about the first axis keeps the solar cells of the solar wing (4, 14) substantially perpendicular to the illuminating rays (18) from the sun throughout each day as the satellite (2, 10) orbits the Earth. Rotation of the solar wing (4, 14) about the second axis keeps the solar cells of the solar wing (4, 14) substantially perpendicular to the illuminating rays (18) from the sun throughout the year as the Earth orbits the sun.

## Description

### FIELD OF THE INVENTION

The invention relates generally to geostationary satellites and, more particularly, to a method and apparatus for performing two axis solar array tacking in a geostationary satellite.

### BACKGROUND OF THE INVENTION

Geostationary satellites which obtain the majority of their power from solar arrays are well known in the art. Geostationary satellites are typically placed in orbit above the equator and remain fixed with respect to the surface of the Earth. Thus, as the Earth rotates about its axis, each geostationary satellite orbits the Earth at a speed which ensures the satellite remains above substantially the same location on the planet's surface.

Such satellites typically include a body which remains oriented in a predefined position towards the Earth, and a pair of solar arrays having a number of solar cells to generate power from sunlight. The antennas of the satellites are typically located on the body. The solar arrays are the primary power source on a satellite, and they must be oriented toward the sun to provide power. However, since the body of a geostationary satellite must remain in a fixed orientation (i.e., pointed at the Earth), the orbital movement of the satellite about the axis of the Earth will cause fixed solar array wings to turn at least partially away from the sun at various times during the day.

Prior art geostationary satellites have addressed this problem with single axis solar wing positioners. Such positioners have included a pair of stepper motors for each solar wing. These redundant stepper motors rotate the solar wings through a complete revolution about their longitudinal axes (typically defined by their yokes) once every 24 hours to keep the solar array wings pointed at the sun while the satellite body remains pointed at the Earth. Such single axis positioners have been effective at maintaining the surface of solar wings directed toward the sun as their associated satellites orbit the Earth.

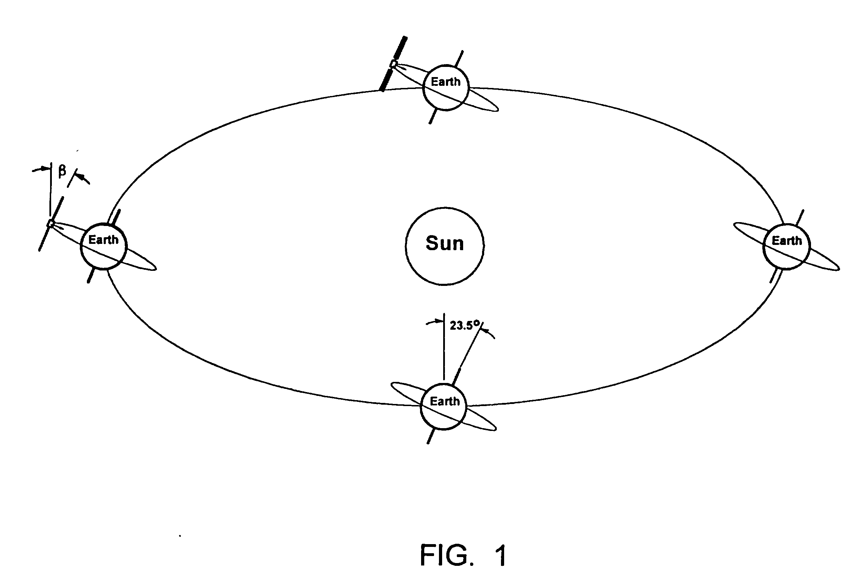

However, single axis positioners do not address the effect of the Earth's orbit around the sun on the angular position of the solar wings of the geostationary satellites with respect to sunlight. More specifically, as shown in FIG. 1, the axis of rotation of the Earth is tilted approximately 23.5° with respect to the plane of the Earth's orbit around the sun. This tilt results in a cyclic variation in the angle at which the sun's rays reach a given location at the Earth as the Earth traverses its orbit. At one extreme of this process are the equinoxes (shown in FIG. 1 as the top and bottom orbital positions of the Earth). At these extremes, the tilt of the Earth's axis and the location of the Earth with respect to the sun are such that the solar wings of the geostationary satellites are positioned in a plane which is substantially perpendicular to the plane of solar illumination. At the other extremes, the solstices (shown in FIG. 1 as the far left and far right orbital positions of the Earth), the circumstances of the Earth's orbit around the sun cause the solar wings of the geostationary satellites to be located at 23.5° angles (in opposite directions) from a plane which is substantially perpendicular to the plane of the solar illumination. This 23.5° deviation from normal results in a reduction in the effective area of the panel. Specifically, the effective area of the panel is reduced by the cosine of 23.5°, leaving only 92% of the effective area present during equinox season when the sun is normal to the solar wing. Due to this reduction in effective area, there is less power available from the array during solstice season. There are also differences in the sun's radiance and in solar array operating temperature which contribute to a variation between equinox and solstice power.

The solar array must be sized to provide power through all mission phases, including during solstice and equinox seasons. The power required by the satellite differs between equinox and solstice. At equinox, the power requirement is typically higher since, in addition to the payload, the array must support a high battery recharge load during eclipse season (i.e., when the Earth blocks the satellite from the sun during a portion of the day). If the ratio of equinox to solstice power required is less than the ratio of equinox to solstice power available from the array, the array is said to be solstice limited. If the array is solstice limited, the array has been sized to meet the power requirements of the satellite during solstice season in the presence of the 23.5° variation in sun angle, and there is excess power available during equinox season.

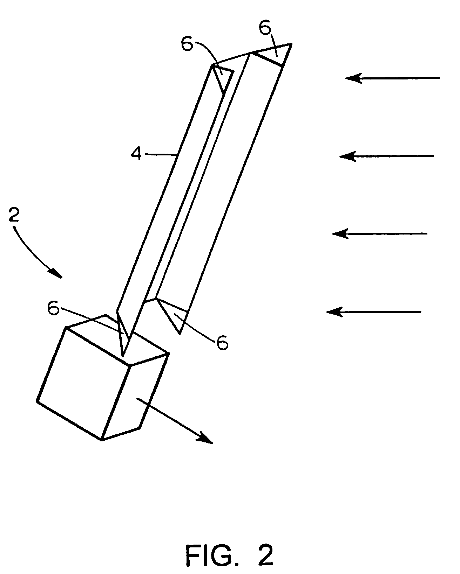

The seasonal variation in sun angle presents a particular problem for solar arrays utilizing reflectors to gather additional sunlight. The solar cell circuits are optimized assuming concentrated sunlight on the solar cells. In the presence of a variation in sun angle, the cells at the end of the array do not receive concentrated sunlight (i.e., these cells are effectively shadowed during certain seasons). One method of addressing this problem is to add winglets 6 to the reflectors. For example, as shown in FIG. 2, some geostationary satellites 2 employing concentrator solar array wings 4 implemented as reflectors have added winglets 6 to their wings 4 to gather additional sunlight in the presence of the 23.5° sun angle. These winglets 6 reflect additional light toward the array panels 4 to compensate for the orbit induced angular losses discussed above.

By way of another example, medium and low orbit satellites address this problem of varying sun angle by keeping the entire spacecraft in a fixed position relative to the sun by moving the entire spacecraft to a new position that offsets the orbit-induced angular variations from normal discussed above. Geostationary satellites typically cannot employ such an approach because their bodies, and the antennas they carry, must remain directed towards Earth.

Some prior art geostationary satellites employ two axis positioners for the solar array. The primary axis rotates 360° to cause the solar wing to track the sun throughout the day. The secondary axis is adjusted through a small angle (less than 10°) to adjust the area of the solar wing normal to the sun. This latter adjustment is done to balance solar torques on the spacecraft. This adjustment is made through either open loop or closed loop control systems, but is not done to adjust for the seasonal power losses discussed above.

### SUMMARY OF THE INVENTION

In accordance with an aspect of the invention, an apparatus is provided for use with a geostationary satellite having a body, a yoke, and a solar wing mounted on the yoke. The apparatus includes a rotational motor in operative engagement with the yoke for selectively rotating the yoke about a first axis. It also includes a pivoting motor in operative engagement with the yoke for selectively pivoting the yoke about a second axis which is substantially perpendicular to the first axis. In addition, the apparatus is provided with a control circuit in communication with the pivoting motor for selectively causing the pivoting motor to pivot the yoke about the second axis between 0° and up to approximately 23.5° in a first direction and between 0° and up to approximately 23.5° in a second direction opposite the first direction.

Preferably, the control circuit causes the pivoting motor to pivot the yoke to a position wherein a solar cell located on the solar wing receives substantially maximum exposure to sunlight. Preferably, rotating the solar wing about the first axis compensates for movement of the satellite about an axis of the Earth, and pivoting the solar wing about the second axis compensates for movement of the Earth about the sun.

In some embodiments, the control circuit selects the position of the yoke by monitoring the amount of power produced by the solar wing. In such embodiments, the control circuit preferably comprises part of a closed loop circuit for controlling the pivoting of the solar wing. In addition to the control circuit, the closed loop circuit preferably includes the pivoting motor, the solar wing and a power sensing circuit.

In some embodiments, the control circuit selects the position of the yoke based on data stored in memory. The data in memory may optionally define a substantially sinusoidal curve indicative of a desired position of the yoke at predefined times in a year. The predefined times may optionally comprise every day of the year.

In some embodiments, the satellite includes a second solar wing and a second yoke; the apparatus further comprises a second pivoting motor in operative engagement with the second yoke for selectively pivoting the second yoke about a third axis; and the control circuit is in communication with the second pivoting motor for selectively causing the second pivoting motor to pivot the second yoke about the third axis. In such embodiments, the solar wings may optionally be located on opposite sides of the body of the satellite, and the control circuit may optionally cause the stepper motors to pivot the solar wings in substantially equal but opposite directions.

In some embodiments, the pivoting motor pivots the solar wing at least approximately 23.5° in the first direction from an uncorrected position at a first solstice, and at least approximately 23.5° in the second direction from the uncorrected position at a second solstice. Preferably, the solar wing is not pivoted when the Earth is in the equinox positions.

In some embodiments the solar wing comprises a concentrator array.

In accordance with an aspect of the invention, a method is provided for increasing the power developed by a solar cell disposed on a solar wing of a geostationary satellite. The method comprises the steps of: rotating the solar wing about a first axis to compensate for movement of the satellite about an axis of the Earth; and pivoting the solar wing about a second axis to compensate for movement of the Earth about the sun.

In some embodiments, the step of pivoting the solar wing about a second axis further comprises the step of determining the degree of pivoting by determining an orbital position of the Earth with respect to the sun.

In some embodiments, the step of pivoting the solar wing about a second axis further comprises the step of determining the degree of pivoting by identifying the day of the year and consulting data defining a substantially sinusoidal stepping profile indicative of a degree and a direction of movement for the solar wing as a function of the day of the year.

In some embodiments, the step of pivoting the solar wing about a second axis further comprises the step of determining the degree of pivoting by sensing the power developed by the solar cell and pivoting the wing until the sensed power is substantially maximized.

In some embodiments, the step of pivoting the solar wing about the second axis is performed by pivoting the wing between 0° and approximately 23.5° in a first direction during a first time of the year, and between 0° and approximately 23.5° in a second direction opposite the first direction during a second time of the year.

Other features and advantages are inherent in the apparatus claimed and disclosed or will become apparent to those skilled in the art from the following detailed description and its accompanying drawings.

### BRIEF DESCRIPTION OF THE DRAWINGS

FIG. 1 is a schematic illustration representing the orientation of a geostationary satellite orbiting the Earth as the Earth orbits the sun.
FIG. 2 is a schematic illustration of a representative prior art satellite employing a concentrator array as a solar wing.
FIG. 3 is a schematic illustration of a geostationary satellite constructed in accordance with the teachings of the invention.
FIG. 4 is a schematic illustration of an open loop control system for the satellite shown in FIG. 3.
FIG. 5 is a graphical illustration of a representative stepping profile for use with the open loop control system of FIG. 4.
Fig. 6 is a schematic illustration of a closed loop control system for the satellite shown in FIG. 3.

### DESCRIPTION OF THE PREFERRED EMBODIMENTS

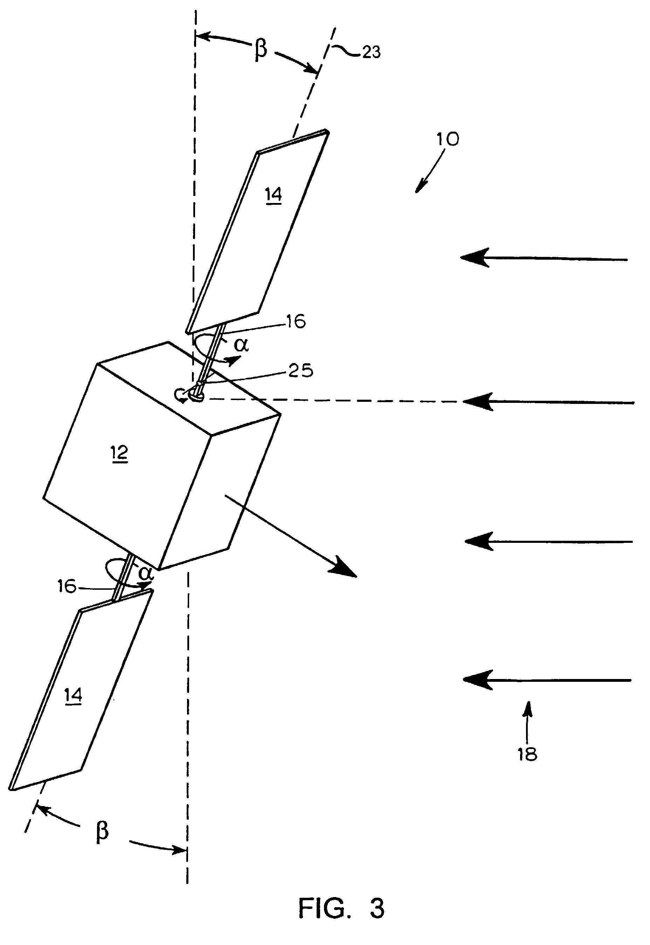

A geostationary satellite 10 constructed in accordance wit the teachings of the invention is illustrated in FIG. 3. As shown in that figure, the satellite 10 includes a body 12 which typically holds the control electronics, the navigational and telemetry electronics, and the antennas for the satellite. The satellite 10 also includes a pair of solar wings or panels 14. Each of the solar wings 14 includes a plurality of solar cells and is independently mounted on a yoke 16. As shown in FIG. 3, the yokes 16 typically extend from opposite sides of the body 12. The solar wings 14, yokes 16 and body 12 are of conventional design and will not be further discussed herein.

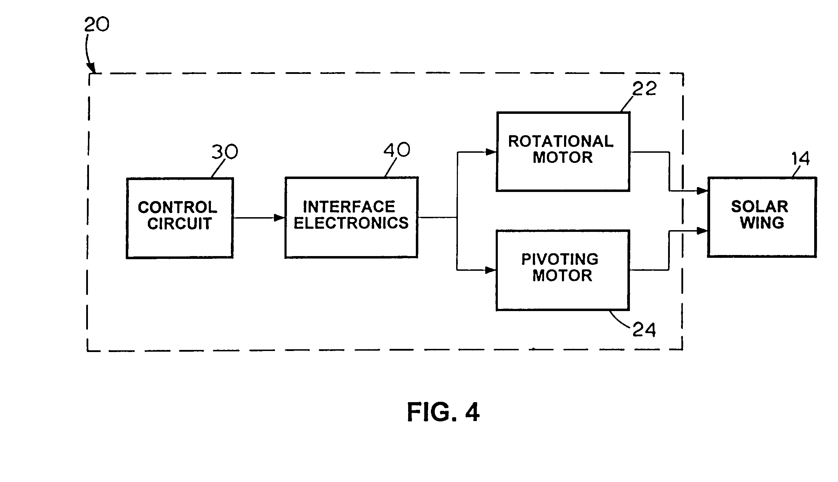

An apparatus for performing two axis solar array tracking 20 constructed in accordance with the teachings of the invention is shown in FIG. 4. As explained in detail below, the apparatus 20 is adapted for positioning the solar wing(s) 14 of a geostationary satellite 10 to maximize the power developed thereby. The illustrated apparatus 20 is preferably mounted within or on the body 12 of the satellite 10. As explained below, the apparatus 20 shown in FIG. 4 is particulary adapted for open loop control.

For the purpose of rotating the solar wings 14 about a first axis 23 to compensate for movement of the satellite 10 about an axis of the Earth, the apparatus 20 is provided with rotational motors 22. In the preferred embodiment, each yoke 16 is coupled to at least one such rotational motor 22 such that each yoke 16 can be independently rotated about its longitudinal axis. Preferably, the rotational motors 22 are controlled to pivot their associated panels 14 through one complete revolution approximately once every 24 hour period to maintain the panels 14 oriented towards the sun as the satellite 10 orbits the Earth.

As shown in FIG. 3, the angular position of the panels 14 about the longitudinal axis of the yoke 16 is defined by the angle α. As also shown in FIG. 3, while rotating the panels 14 about the yoke axis as the Earth rotates about its axis maintains the surface of the solar panels 14 directed substantially towards the solar illumination 18 arriving from the sun, rotating the panels 14 about the longitudinal axis of the yoke 16 does not compensate for seasonal angular variations (defined by angleβ) caused by the Earth's rotation about the sun.

To compensate for the effects of the movement of the Earth about the sun, the apparatus 20 is provided with pivoting motors 24. In the preferred embodiment, each yoke 16 is coupled to at least one such pivoting motor 24 such that each yoke 16 can be independently rotated about an axis 25 which is substantially perpendicular to its longitudinal axis. As illustrated in FIG. 3, the pivoting motors are preferably controlled to rotate their associated yokes 16 through an angle β which is sufficient to compensate for the seasonal variations in the angular position of the satellite 10 with respect to the sun. The degree of pivoting required for a given satellite is dependent upon the ratio of power required during equinox season to the power required during solstice season which is, in turn, dependent upon well known physical parameters of the solar wings including the number of solar cells present on the wings.

Although, in the preferred embodiment, the pivoting motors 24 and the rotating motors 22 are implemented as conventional stepper motors such as the motors sold by Honeywell, persons of ordinary skill in the art will appreciate that other motors can be implemented in these roles without departing from the scope or spirit of the invention. Similarly, while persons of ordinary skill in the art will appreciate from the above disclosure that only one pivoting motor and one rotational motor are needed to maintain the surface of a solar panel substantially perpendicular to the solar illumination 18 arriving from the sun throughout substantially every day of the year, in the preferred embodiment two rotational motors and two pivoting motors are used for each yoke 16. Preferably, these paired motors are redundantly arranged such that either one of the pivoting motors 24 can pivot the panel 14 about the second axis if the other pivoting motor fails, and such that either one of the rotational motors 22 can rotate the panel 14 about the first axis if the other rotational motor fails.

Persons of ordinary skill in the art will further appreciate that, although the above description has assumed that the satellite 10 includes two solar wings 14 and two yokes 16, the teachings of the invention can be applied to satellites having any number of wings 14 and yokes 16 including, but not limited to one wing 14 and one yoke 16. In instances where two wings 14 and two yokes 16 are employed, the wing/yoke pairs are preferably located on opposite sides of the satellite body 12, and the pivoting motors 24 are preferably controlled to pivot the solar wings 14 in substantially equal but opposite directions as illustrated in FIG. 3.

In order to control the operations of the pivoting and rotational motors 24, 22, the apparatus 20 is further provided with a control circuit 30 (see FIG. 4). The control circuit 30 is preferably in communication with the pivoting motors 24 and the rotational motors 22 to adjust the positions of the yokes 16 such that the solar cells of the solar wings 14 receive substantially maximum exposure to sunlight throughout each day of the year. More specifically, in the preferred embodiment, the control circuit controls the rotational motors 22 such that the solar wings 14 rotate through one complete rotation about the longitudinal axis of their associated yokes 16 every 24 hour period. The control circuit also preferably controls the pivoting motors such that each yoke 16 is pivoted about a second axis between 0° and 23° in a first direction and between 0° and approximately 23° in a second direction opposite the first direction. Preferably, the solar wings 14 are pivoted at least approximately 23.5° in a first direction from an uncorrected position at a first solstice, and at least approximately 23.5° in a second direction from the uncorrected position at a second solstice. The first and second directions are preferably reversed for solar wings 14 on opposite sides of the satellite body 12.

Preferably, the solar wings 14 are left in the uncorrected position (i.e., they are not pivoted with respect to the β angle) when the Earth is in either of its equinox positions since, at these times of the year, the panels 14 will be positioned with their solar cells substantially perpendicular to the solar illumination 18 by nature of the Earth's location in its orbit path around the sun.

The control circuit 30 is preferably implemented as a microprocessor such as the 1750A Microprocessor which is commercially available from GEC-Plessey. However, persons of ordinary skill in the art will appreciate that other circuits including, by way of example, not limitation, ASICs and/or digital or analog logic circuits could be employed in this role without departing from the scope or spirit of the invention.

In the preferred embodiment shown in FIG. 4, the apparatus 20 is further provided with interface electronics 40. The interface electronics 40 preferably include the circuitry necessary to permit communication between the control circuit 30 and the motors 22, 24. For example, the interface electronics 40 preferably include a digital to analog convener and/or voltage conversion circuitry to convert the output of the control circuit 30 to a level and format usable by the motors 22, 24.

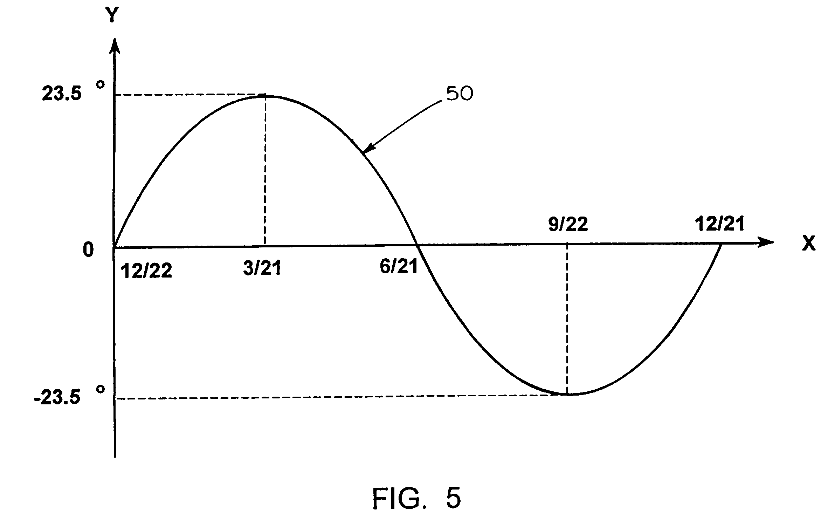

In the embodiment illustrated in FIG. 4, open loop control is utilized to control the operational positions of the solar wings 14. In this embodiment the control circuit 30 selects the position of the yokes 16 based on data stored in a conventional memory (not shown). Preferably, the data in memory defines a sinusoidal curve 50. As illustrated in FIG. 5, the sinusoidal curve 50 is indicative of the desired positions of the yoke at predefined times of the year. More specifically, in the graph shown in FIG. 5, the y-axis defines the angle correction needed to orient the panel 14 substantially perpendicular to the solar illumination 18. The x-axis indicates the days of the year. The control circuit 30 need only perform a look-up of the day of the year to determine the appropriate angle correction for the solar wings 14. Although other time periods could be used in this role, in the preferred embodiment of the open loop control system shown in FIG. 4, the control circuit 30 performs a look-up of the data stored in memory and adjusts the position(s) of the panel(s) every day.

The sinusoidal curves for solar wings 14 on opposite sides of the satellite body 12 (see FIG. 3) are preferably complementary of one another. Thus, the curve 50 shown in FIG. 5 might correspond to the uppermost panel 14 in FIG. 3, whereas a curve corresponding to the lower panel 14 in FIG. 3 would be flipped 180° around the x-axis in FIG. 5.

Persons of ordinary skill in the art will appreciate that, although the rotational motor 22 can be directly controlled by the control circuit 30 as shown in FIG. 4, the apparatus 20 could optionally be implemented such that the rate of rotation of the rotational motor is fixed by a timing circuit without departing from the scope or spirit of the invention. Optionally, the timing circuit may be periodically adjusted by the control circuit 30.

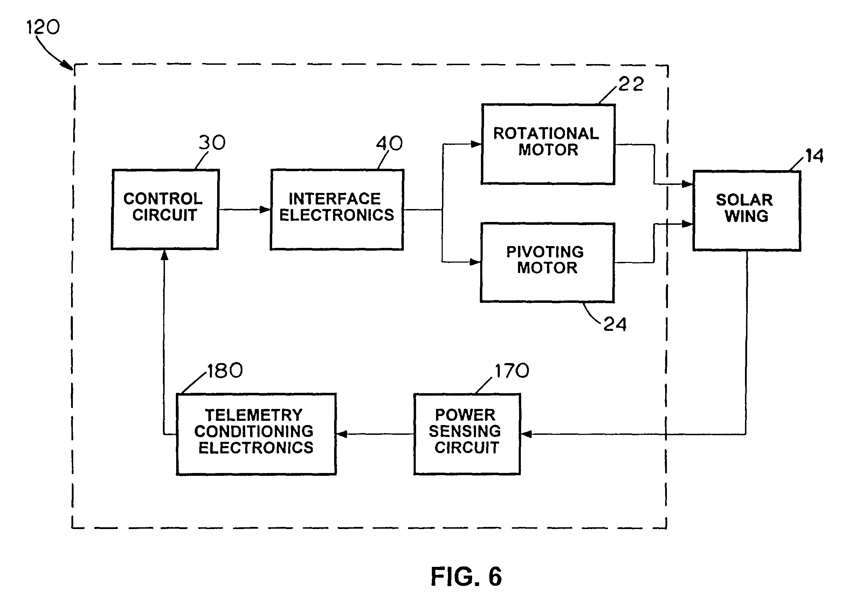

Another apparatus 120 for performing two axis solar array tracking and constructed in accordance with the teachings of the invention is shown in FIG. 6. In the interest of brevity, the components of the apparatus 120 which are common to the apparatus 20 will not be re-described here. Instead, the interested reader is referred to the above description for a detailed discussion of the like-numbered parts in FIGS. 4 and 6.

The apparatus 120 illustrated in FIG. 6 is different from the apparatus 20 shown in FIG. 4 in that the control circuit 30 selects the position(s) of the yoke(s) 16 of the solar wing(s) 14 by monitoring the amount of power produced by the solar cells of the wing(s) 14. In other words, the apparatus 120 includes a closed loop control circuit for controlling the pivoting of the solar wing(s) 14. As shown in FIG. 6, in the illustrated embodiment the closed loop circuit comprises the control circuit 30, the interface electronics 40, the pivoting motor 24, the solar cells of the controlled solar wing 14, a power sensing circuit 170, and telemetry conditioning electronics 180. If more than one wing 14 is controlled, more than one control loop may optionally be employed. Alternatively, the other wings can be controlled (in either an open or closed loop manner) to move to the angle identified by the main control loop discussed above. Such additional control loops would not require power sensing circuits and, thus, would reduce the overall weight of the apparatus. An additional advantage of this latter approach is that differences in the outputs of the panels would not cause the solar wings 14 to have different positions. This is advantageous in that different positions could cause navigational difficulties for the spacecraft.

The power sensing circuit 170 develops an output signal indicative of the amount of power output by the solar wing 14. Preferably, the power sensing circuit 170 is implemented as a current sensing resistor. However, persons skilled in the art will readily appreciate that other power sensing circuits could likewise be employed without departing from the scope or spirit of the invention.

The output of the power sensing circuit 170 is input to the telemetry conditioning electronics 180. The conditioning electronics 180 preferably include an analog to digital convener to convert the output of the power sensing circuit 170 to a format appropriate for use by the preferably microprocessor-based control circuit 30. The control circuit 30 can then control the pivoting motor 24 to adjust the position of the solar wing 14 until the power detected by the power sensing circuit 170 is maximized. Preferably, the control circuit 30 is programmed to perform the solar wing 14 adjustments based on the power readings on a periodic basis such as once a day.

In the embodiment illustrated in FIG. 6, the control loop for the angle adjustment is preferably separate from the control loop for the angle adjustment. However, the control loops may optionally be nested. The angle adjustment can be performed pursuant to any of the conventional techniques known in the art.

In view of the foregoing, persons of ordinary skill in the art will appreciate that the teachings of the present invention may be applied to a wide range of geostationary satellites with beneficial results. In instances where concentrator arrays are employed, the teachings of the present invention make it possible to eliminate the winglets associated with prior art satellites (see FIG. 2 and the accompanying description above) thereby greatly simplifying the design and construction of the concentrator array.

Briefly summarized, the present invention provides for an apparatus 20, 120, in which a rotational motor 22 is employed for selectively rotating a solar wing 4, 14 about a first axis 23, and a pivoting motor 24 is used for selectively pivoting the solar wing 4, 14 about a second axis 25 which is substantially perpendicular to the first axis. Rotation of the solar wing 4, 14 about the first axis keeps the solar cells of the solar wing 4, 14 substantially perpendicular to the illuminating rays 18 from the sun throughout each day as the satellite 2, 10 orbits the Earth. Rotation of the solar wing 4, 14 about the second axis keeps the solar cells of the solar wing 4, 14 substantially perpendicular to the illuminating rays 18 from the sun throughout the year as the Earth orbits the sun.

Although certain instantiations of the teachings of the invention have been described herein, the scope of coverage of this patent is not limited thereto. On the contrary, this patent covers all instantiations of the teachings of the invention fairly falling within the scope of the appended claims either literally or under the doctrine of equivalents.

## Claims

1. An apparatus for use with a geostationary satellite (2, 10) having a body (12), a yoke (16), and a solar wing (4, 14) mounted on the yoke (16), the solar wing (4, 14) including at least one solar cell, characterized by:
a rotational motor (22) in operative engagement with the yoke (16) for selectively rotating the yoke (16) about a first axis (23);
a pivoting motor (24) in operative engagement with the yoke (16) for selectively pivoting the yoke (16) about a second axis (25), the second axis being substantially perpendicular to the first axis (23); and
a control circuit (30) in communication with the pivoting motor (24) for selectively causing the pivoting motor (24) to pivot the yoke (16) about the second axis (25) between 0° and up to approximately 23.5° in a first direction and between 0° and up to approximately 23.5° in a second direction opposite the first direction.

2. An apparatus as defined in claim 1, characterized in that the pivoting motor (24) comprises a stepper motor.

3. An apparatus as defined in claim 1, characterized in that the pivoting motor (24) comprises two stepper motors, the stepper motors being redundant such that one of the stepper motors can rotate the yoke (16) alone if the other motor fails.

4. An apparatus as defined in any of claims 1 through 3, characterized in that the control circuit (30) causes the pivoting motor (24) to pivot the yoke (16) to a position wherein the at least one solar cell of the solar wing (4, 14) receives substantially maximum exposure to sunlight.

5. An apparatus as defined in claim 4, characterized in that the control circuit (30) selects the position of the yoke ( 16) by monitoring the amount of power produced by the solar wing (4, 14).

6. An apparatus as defined in any of claims 1 through 4, characterized in that the control circuit (30) selects the position of the yoke (16) based on data stored in memory.

7. An apparatus as defined in claim 6, characterized in that the data in memory defines a sinusoidal curve (50) indicative of a desired position of the yoke (16) at predefined in a year.

8. An apparatus as defined in claim 7, characterized in that the predefined times comprise every day of the year.

9. An apparatus as defined in any of the preceding claims, characterized in that the control circuit (30) comprises a microprocessor.

10. An apparatus as defined in any of the preceding claims, characterized by a closed loop circuit (30, 170, 180) for controlling the pivoting of the solar wing (14).

11. An apparatus as defined in claim 10, characterized in that the closed loop circuit comprises the control circuit (30), the pivoting motor (24), the solar wing (4, 14) and a power sensing circuit (170).

12. An apparatus as defined in any of the preceding claims, wherein the satellite (2, 10) includes a second solar wing (4, 14) and a second yoke (16); the apparatus being characterized by a second pivoting motor (24) in operative engagement with the second yoke (16) for selectively pivoting the second yoke (16) about a third axis; and wherein the control circuit (30) is in communication with the second pivoting motor (24) for selectively causing the second pivoting motor (24) to pivot the second yoke (16) about the third axis.

13. An apparatus as defined in claim 12, characterized in that the solar wings (4, 14) are located on opposite sides of the body (12) of the satellite (2, 10), and the control circuit (30) causes the pivoting motors (24) to pivot the solar wings (4, 14) in substantially equal but opposite directions.

14. An apparatus as defined in any of the preceding claims, characterized in that rotating the solar wing (4, 14) about the first axis (23) compensates for movement of the satellite (2, 10) about an axis of the Earth.

15. An apparatus as defined in any of the preceding claims, characterized in that pivoting the solar wing (4, 14) about the second axis (25) compensates for movement of the Earth about the sun.

16. An apparatus as defined in any of the preceding claims, characterized in that the pivoting motor (24) pivots the solar wing (4, 14) at least approximately 23.5° in the first direction from an uncorrected position at a first solstice, and at least approximately 23.5° in the second direction from the uncorrected position at a second solstice.

17. An apparatus as defined in claim 16, characterized in that the solar wing (4, 14) is not pivoted when the Earth is in the equinox positions.

18. An apparatus as defined in any of the preceding claims, characterized in that the solar wing (4, 14) comprises a concentrator array (4).

19. A method for increasing the power developed by a solar cell disposed on a solar wing (4, 14) of a geostationary satellite (2, 10) comprising the steps of:
rotating the solar wing (4, 14) about a first axis (23) to compensate for movement of the satellite (2, 10) about an axis of the Earth; and
pivoting the solar wing (4, 14) about a second axis (25) to compensate for movement of the Earth about the sun.

20. A method as defined in claim 19, characterized in that the step of pivoting the solar wing (4, 14) about a second axis (25) further comprises the step of determining the degree of pivoting by determining an orbital position of the Earth with respect to the sun.

21. A method as defined in claim 19, characterized in that the step of pivoting the solar wing (4, 14) about a second axis (25) further comprises the step of determining the degree of pivoting by identifying the day of the year and consulting data defining a substantially sinusoidal stepping profile (50) indicative of a degree and a direction of movement for the solar wing (4, 14) as a function of the day of the year.

22. A method as defined in claim 19, characterized in that the step of pivoting the solar wing (4, 14) about a second axis (25) further comprises the step of determining the degree of pivoting by sensing the power developed by the solar cell and pivoting the wing until the sensed power is substantially maximized.

23. A method as defined in claim 19, characterized in that the step of pivoting the solar wing (4, 14) about the second axis (25) is performed by pivoting the wing between 0° and approximately 23.5 ° in a first direction during a first time of the year, and by pivoting the wing between 0° and approximately 23.5° in a second direction opposite the first direction during a second time of the year.
